# EUROPÄISCHE PATENTSCHRIFT

(11) **EP 0 536 806 B1**
(45) Veröffentlichungstag und Bekanntmachung des Hinweises auf die Patenterteilung: **29.03.1995**
(21) Anmeldenummer: 92118593.0
(22) Anmeldetag: 16.06.1989
(51) Int. Cl.: G01L 3/10

(54) **Einrichtung zum Messen des Drehmomentes einer durch einen Stellantrieb bewegbaren Armatur**
Device for measuring the torque of an armature movable by an actuator
Dispositif pour mesurer le moment de torsion d'une armature mobile par un vérin

(30) Priorität: 21.06.1988 DE 3820838
(43) Veröffentlichungstag der Anmeldung: 14.04.1993
(62) Teilanmeldung aus: 89110945.6
(73) Patentinhaber: ABB Reaktor GmbH, D-68167 Mannheim (DE)
(72) Erfinder: Stöhr, Hans, W-6800 Mannheim (DE); Mehr, Lothar, W-6840 Lampertheim (DE)
(74) Vertreter: Rupprecht, Klaus, Dipl.-Ing.

(56) Entgegenhaltungen:
- CH-A- 463 145
- DE-A- 2 039 274
- DE-A- 2 340 582
- DE-A- 3 528 364

## Beschreibung

Die Erfindung betrifft eine Einrichtung zum Messen des Drehmomentes einer durch einen Stellantrieb bewegbaren Spindel einer Armatur unter Verwendung wenigstens eines Dehnungsmeßstreifens.

Zur Messung von Drehmomenten an Armaturen werden bisher Meßeinrichtungen verwendet, welche die zu übertragende Kraft mit Hilfe von Wägezellen messen, die mit Dehnungsmeßstreifen bestückt sind. Der konstruktive Aufbau und die daraus resultierende Baugröße ist nicht geeignet, diese Meßeinrichtung zwischen Armatur und Stellantrieb bzw. Elektromotor des Stellantriebes permanent zu belassen, so daß diese Meßeinrichtungen nur zu periodischen Messungen einsetzbar sind.

Ferner ist aus der DE-PS 2 250 141 und der DE-AS 1 231 517 eine drehmomentabhängige Abschaltung zum Schutz der Armatur vor Überlast bekannt. Dabei ist die Schneckenwelle des Stellantriebes als Verschiebeschnecke ausgebildet, die über Spannfedern mittig zum Schneckenrad gehalten ist. Tritt an der Antriebswelle ein Lastmoment auf, das größer ist als das durch die Vorspannung der Federn eingestellte Moment, drückt die Umfangskraft am Schneckenrad die Schneckenwelle aus ihrer Mittellage und betätigt über ein Hebelsystem den dazugehörigen Drehmomenttaster, der den Motor elektrisch abschaltet. Eine solche mechanische Steuereinheit ist aufwendig und wegen der Vielzahl mechanischer Übertragungselemente störanfällig.

In der DE-OS 3 528 364 wird ein Reaktionsdrehmomentaufnehmer beschrieben, der vorwiegend zum Anziehen von Schrauben verwendet wird. Er besteht aus zwei über ein Torsionsrohr miteinander verbundenen Flanschen.

Weiterhin ist aus der CH-PS 463 145 eine Anordnung aus koaxialen Nabenelementen bekannt, die eine Umlenkung des Kraftflusses zu einem Kettentrieb ermöglichen. Eine der Naben ist als Meßnabe ausgebildet. Die Naben sind einendig starr miteinander verbunden und an ihren anderen Enden gegeneinander verdrehbar.

Die Erfindung stellt sich die Aufgabe, eine Einrichtung der eingangs genannten Art anzugeben, die permanent eingebaut ist und während einer Verstellbewegung der Armaturenspindel eine kontinuierliche Drehmomentmessung erlaubt.

Gelöst wird diese Aufgabe erfindungsgemäß dadurch, daß das Gehäuse des Stellantriebes und das Gehäuse der Armatur in Reihe angeordnet sind, von einer eine Hubbewegung ausführenden Armaturenspindel durchsetzt und über eine Verschraubung unmittelbar miteinander verbunden sind, und daß eine zentrale Antriebssäule des Stellantriebes eine Freidrehung aufweist, die den Dehnungsmeßstreifen trägt.

Durch die Ausbildung eines Bauteiles des Stellantriebes als überwachendes Torsionselement werden die äußeren Baumaße der Baueinheit Armatur/Stellantrieb nicht verändert, so daß eine Schwerpunktverschiebung nicht eintritt.

Mit der kontinuierlichen Messung des Drehmomentes können mechanische Veränderungen in der Baueinheit Stellantrieb/Armatur durch den Vergleich von sich ändernden Drehmomentkurven bei gleichen Betriebszuständen frühzeitig erkannt werden. Eine vorbeugende Instandhaltung ist dadurch möglich, bevor der unvorhergesehene Ausfall große Schäden an einer technischen Anlage hervorrufen kann. Die Drehmomentmeßwerte werden unmittelbar zur Ansteuerung des Elektromotors des Stellantriebes verwendet, so daß ein aufwendiger mechanischer Drehmomentbegrenzer nicht erforderlich ist. Die Einrichtung läßt sich ferner zum Steuern von Verfahrensabläufen bei veränderlichen Betriebsparametern einsetzen. So kann beispielsweise bei einer Durchflußregelarmatur ein sich änderndes Drehmoment auf eine Viskositäts- oder Durchflußänderung hinweisen.

Die Signale des Dehnungsmeßstreifens werden dabei vorzugsweise induktiv durch den Dehnungsmeßstreifen zugeordnete Spulen übertragen.

Ein mit der zentralen Antriebssäule verbundener Spulenrotor übergreift den Dehnungsmeßstreifen und dient vorzugsweise als Schutzhülle.

Anhand eines Ausführungsbeispiels und einer schematischen Zeichnung wird die erfindungsgemäße Einrichtung beschrieben.

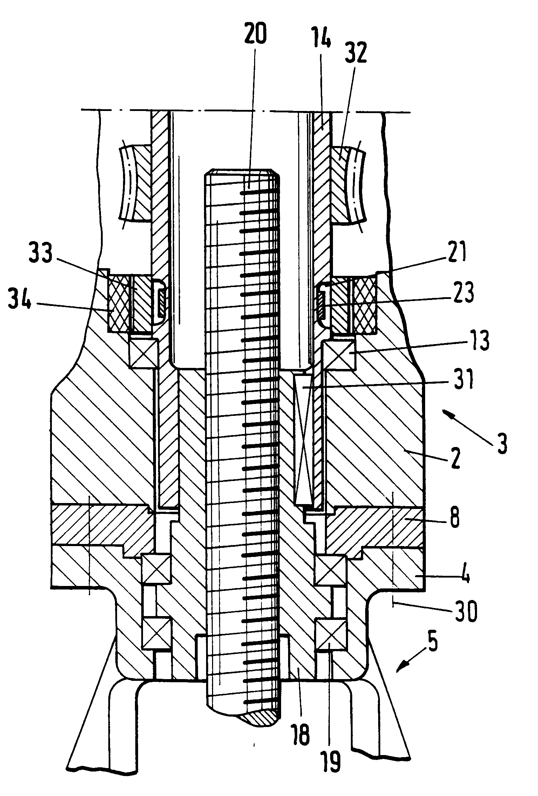

Die einzige Figur zeigt einen Längsschnitt durch einen Teilbereich der Baueinheit Stellantrieb 3/Armatur 5 mit einer als Torsionselement ausgebildeten Zentralantriebssäule 14 des Stellantriebs 3. Ein Gehäuse 2 eines Stellantriebes 3 und ein Gehäuse 4 einer Armatur 5 sind in Reihe angeordnet und über eine Verschraubung 30 unmittelbar miteinander verbunden. Der Ring 8 dient als Halteelement des Kugellagers 19 und stellt somit einen Teil des Gehäuses 4 dar. Die Zentralantriebssäule 14 ist über eine Nut-/Federverbindung 31 mit einer Gewindehülse 18 kraftschlüssig verbunden. Das Drehen der über Kugellager 19 abgestützten Gewindehülse 18 führt zur Hubbewegung einer Spindel 20 der Armatur 5. Ein mit der Zentralantriebssäule 14 verbundenes Schneckenrad 32 wird von einer nicht dargestellten Schneckenwelle angetrieben. Durch eine Freidrehung 21 ist mit der Zentralantriebssäule 14 ein Bauteil des Stellantriebes 3 als Dehnungsbuchse ausgebildet, die im Bereich der Freidrehung 2 diametral gegenüberliegend angeordnete Dehnungsmeßstreifen 23 trägt. Ein der Zentralantriebssäule 14 zugeordneter Spulenrotor 33 und ein stationär mit dem Gehäuse 2 verbundener Spulensatator 34 dienen der induktiven Übertragung der Meßsignale zu einem nicht dargestellten Meßverstärker. Der Spulenrotor 33 dient dabei gleichzeitig als Schutzhülle für die Dehnungsmeßstreifen 23. Der Kraftfluß und die Drehbewegung vom Stellantrieb wird direkt in die Gewindebuchse geleitet. Der mit einer Schwächung versehene Bereich der Zentralantriebssäule 14 wird einem Torsionsmoment ausgesetzt. Dieses Torsionsmoment wird über die Dehnungsmeßstreifen gemessen und induktiv an den nicht dargestellten Meßverstärker weitergegeben. Vom Meßverstärker gelangt das Ausgangssignal zu einer nicht dargestellten Auswertestation und/oder zu einer ebenfalls nicht dargestellten Steuereinheit des Stellantriebs-Motor. In der Auswertestation werden die Drehmomentkurven mit Sollkurven bestimmter Betriebsabläufe der Baueinheit Stellantrieb/Armatur verglichen. Abweichungen geben Aufschluß über mechanische Veränderungen in der Baueinheit und erlauben z.B. eine vorbeugende Instandsetzung. Die der Steuereinheit des Elektromotors für den Stellantrieb zufließenden Signale führen zum Abschalten des Motors beim Überschreiten eines zulässigen Drehmomentes.

## Patentansprüche

1. Einrichtung zum Messen des Drehmomentes einer durch einen Stellantrieb (3) bewegbaren Spindel (20) einer Armatur (5) unter Verwendung wenigstens eines Dehnungsmeßstreifens (23), dadurch gekennzeichnet, daß das Gehäuse (2) des Stellantriebes (3) und das Gehäuse (4) der Armatur (5) in Reihe angeordnet sind, von der eine Hubbewegung ausführenden Armaturenspindel (20) durchsetzt und über eine Verschraubung (30) unmittelbar miteinander verbunden sind, und daß eine zentrale Antriebssäule (14) des Stellantriebes (3) eine Freidrehung (21) aufweist, die den Dehnungsmeßstreifen (23) trägt.

2. Einrichtung nach Anspruch 1, dadurch gekennzeichnet, daß dem Dehnungsmeßstreifen (23) Spulen zur induktiven Übertragung der Meßsignale zugeordnet sind.

3. Einrichtung nach Anspruch 2, dadurch gekennzeichnet, daß ein mit der zentralen Antriebssäule (14) verbundender Spulenrotor (33) den Dehnungsmeßstreifen (23) übergreift und als Schutzhülle dient.

4. Verwendung einer Einrichtung nach Anspruch 1 zum Steuern von Verfahrensabläufen technischer Anlagen.

## Claims

1. Device for measuring the torque of an armature (5) spindle (20) which can be moved by an actuator (3), using at least one strain guage (23), characterized in that the housing (2) of the actuator (3) and the housing (4) of the armature (5) are arranged in series, are penetrated by the armature spindle (20) which carries out a lifting movement and are connected directly to one another via a screwed connection (30), and in that a central drive column (14) of the actuator (3) has a freely rotating portion (21) which bears the strain guage (23).

2. Device according to Claim 1, characterized in that the strain guage (23) is assigned coils for inductively transmitting the measurement signals.

3. Device according to Claim 2, characterized in that a coil rotor (33) which is connected to the central drive column (14) engages over the strain guage (23) and serves as a protective sleeve.

4. Use of a device according to Claim 1 for controlling operational sequences of technical systems.

## Revendications

1. Dispositif pour la mesure du couple sur la tige (20) d'une robinetterie (5), manoeuvrée par une servo-commande (3), avec utilisation d'au moins une jauge de contrainte (23), caractérisé par le fait que le corps (2) de la servocommande (3) et le corps (4) de la robinetterie (5) sont disposés en série, sont traversés par la tige (20) de la robinetterie, effectuant un mouvement de levée, et sont reliés directement entre eux par vis (30), et qu'une colonne centrale de commande (14) de la servo-commande (3) présente un affaiblissement (21) qui porte la jauge de contrainte (23).

2. Dispositif suivant la revendication 1, caractérisé par le fait que des bobines sont associées à la jauge de contrainte (23) en vue de la transmission inductive des signaux de mesure.

3. Dispositif suivant la revendication 2, caractérisé par le fait qu'un rotor de bobine (33) relié à la colonne centrale de commande (14) dépasse la jauge de contrainte (23) et sert d'enveloppe de protection.

4. Utilisation d'un dispositif suivant la revendication 1, pour la commande du déroulement de processus dans des installations techniques.
